# EUROPEAN PATENT APPLICATION

(11) **EP 1 958 749 A1**
(43) Date of publication of application: **20.08.2008**
(21) Application number: 07102416.0
(22) Date of filing: 14.02.2007
(51) Int. Cl.: B29C 44/12, B60N 2/00

(54) **Method for providing a foam element with a flexible sensor**

(71) Applicant: IEE INTERNATIONAL ELECTRONICS & ENGINEERING S.A., 6468 Echternach (LU)
(72) Inventor: Lorenz, Holger, 54470, Bernkastel (DE); Orsello, Roberto, 1251, Luxembourg (LU); Orlewski, Pierre, 9021, Ettelbruck (LU)
(74) Representative: Beissel, Jean

(57) **Abstract**

A method for providing a foam element with a film-type sensor (16) comprises providing a mould in which the foam element is to be foamed, positioning the sensor (16) within the mould and forming the foam element in the mould by foaming. The method comprises sheathing at least a part of the sensor with a rigid sheath (18), which protects at least the said part of the sensor (16) during the foaming of the foam element and which may be removed (25) from the foam element after the foaming thereof, before or after removing the foam element from the mould.

## Description

### Technical field

The present invention generally relates to the manufacturing of foam elements, e.g. for vehicle seats, in particular to the manufacturing of foam elements equipped with a flexible sensor.

### Background Art

Foam elements having disposed therein a sensor, such as e.g. a pressure or force sensor, are common for instance in the automotive industry, for the detection and/or classification of an occupant or object on a vehicle seat. Positioning of the sensor within the foam element - rather than between the foam element and a trim - is considered advantageous for improved haptics. Indeed, the flexibility of the sensor typically deviates from the flexibility of the foam element so that a sensor provided on top of the foam element may remain noticeable by a person seated thereon despite of the presence of a trim.

Document DE 197 52 976 A1 discloses a pressure-responsive switch embedded in a seat cushion of a vehicle seat. The main foam body of the seat cushion is provided at its bottom with a recess into which the pressure-responsive switch is placed and which is closed with a separate foam element, so that, in the end, the pressure-responsive switch is sandwiched between the main foam body and the separate foam element. Similar arrangements are known from DE 196 46 480 A1 and US 6,428,095. The latter document also describes a sensor being provided in a substantially horizontal slit within the seat foam.

Document EP 1 413 471 A1 discloses a cushion of a vehicle seat comprising a trim and a foam body equipped with a pressure detection mat at defined depth inside the foam body. The document further discloses a method for manufacturing such vehicle seat cushion. According to this method, the sensor mat is positioned by means of a support within a mould used for foaming the foam body, whereupon foam or precursor mixture of foam is injected into the mould and surrounds the sensor mat. The foamed body is then removed from the mould. In the cushion, the sensor mat can be wrapped within a protective sleeve that prevents a possible contamination of components of the sensor mat by the foam. It is worthwhile noting that since the protective sleeve in this document remains in the finished cushion, the sleeve is flexible so as to transfer pressure and/or force onto the sensing mat.

### Technical problem

It is an object of the present invention to provide an improved method of providing a foam element with a flexible sensor.

This object is achieved by a method as claimed in claim 1.

### General Description of the Invention

In a method for providing a foam element with a film-type sensor, it is provided a mould in which the foam element is to be foamed, the sensor is positioned within the mould and the foam element is formed in the mould by foaming. According to an important aspect of the invention, the method comprises sheathing at least a part of the sensor with a rigid sheath. This rigid sheath protects at least the said part of the sensor during the foaming of the foam element and may be removed from the foam element after the foaming thereof, before or after removal of the foam element from the mould. The flexible sensor could be any kind of sensor, e.g. a weight or pressure sensor, or a capacitive sensor. It should be noted that the qualifier "rigid", when used herein in conjunction with "sheath", designates a degree of rigidity that is sufficient to hold the sensor and maintain its shape in the sheathed part during the foaming. The sheath could, for instance, be made of metal and/or plastic. As will be appreciated, the method according to the invention allows foaming in of film-type pressure or force sensors while shielding certain parts thereof from the foam. In conventional foaming in methods, there is the risk that the load on the sensor exerted by the expanding foam during the foaming preloads the pressure-sensitive zone and causes the response of the sensor to deviate from the target response. The new method allows shielding the pressure-sensitive zone of the sensor during the foaming so that such preloads can be avoided. As will furthermore be appreciated, the present method does not require the sensor to be wrapped in a textile pocket or a sleeve that remains in the finished foam element, since the relevant zones of the sensor can be efficiently shielded from the foam by the sheath. Of course, the possibility to omit the pocket or sleeve reduces the costs for material and production.

Advantageously, the sheath does not surround the entire sensor, so that the sensor has one or more parts that remain unsheathed by the sheath during the foaming. In such unsheathed part, the sensor may be provided with through-holes (eyelets), which the foam material is caused to penetrate during the foaming, so that the sensor becomes fixed to the foam element when the foam cures. Additionally or alternatively, such unsheathed part of the sensor can be covered or coated with a material that strongly adheres to the foam element during and/or after the foaming thereof. Such "strongly adhesive" material provides for increased physical and/or chemical bonding at the contact surface between the sensor and the foam material. For increase physical bonding (i.e. friction) one might choose e.g. knitted, woven or non-woven textile patches fixed to the sensor.

Advantageously, the sheath has outer surfaces comprising or being covered with a material at most weakly adhesive to the foam element during the foaming thereof. Those skilled will appreciate that the term "weakly adhesive" stands in contrast to "strongly adhesive" as used hereinbefore. Such weakly adhesive material allows removing the sheath from the foam element without damaging the latter. Preferably such material provides the sheath with a chemically inert surface so that at most little chemical bonding occurs at the contact surface between the foam material and the sheath. Most preferably, the material also reduces friction at the contact surface. The sheath may be permanently covered with the weakly adhesive material; such permanent covering could e.g. be made of polytetrafluoroethylene (PTFE, better known under DuPont's trade name Teflon^{™}), fluorinated ethylene-propylene (FEP) or perfluoroalkoxy polymer resin (PFA). Additionally or alternatively, weakly adhesive material could be applied as a lubricant before each foaming process; in this case, suitable materials could e.g. be wax, grease or oil. Those skilled will understand that the choice of the material to be used may depend upon compatibility with the foam material.

According to a preferred embodiment of the invention, the sheath is fastened, e.g. clipped or clamped, to the sensor prior to the foaming and unfastened from the sensor after the foaming. Fastening of the sensor ensures that it remains in the desired position during the foaming process.

Preferably, the sheath is removably fastened to the mould for positioning the sensor within the mould. This may help to ensure planarity of the sensor within the foam element. Mounting the sheath on the mould is preferably done using standardised bushings, so that maximum transferability of different sensors to different moulds is achieved. As will be appreciated, the sheath may be removably fastened to any side of the mould (e.g. a back, a front, a lateral, a top and/or a bottom side of the mould). Accordingly, the present method gives a great amount of design freedom. Removing the sheath can be achieved by retracting the sheath through the bushing. Alternatively, when the foam element is removed from the mould prior to the removal of the sheath, the sheath can simply be pulled from the foam element.

According to a preferred embodiment of the invention, the sheath comprises a first plate and a second plate, which are arranged so as to sandwich the part of the sensor to be protected. The first and second plates can e.g. be connected to one another by a hinge.

The sheath may further comprise convex surface portions for providing spacing between the sensor and the foam element. Alternatively or additionally, the sheath may comprise concave surface portions. This may be particularly advantageous if the sensor comprises pressure-sensitive cells. Such concave surface portions could then be associated with the pressure-sensitive cells, causing the foam element to be provided with actuator elements formed thereon, associated with the pressure-sensitive cells.

Another optional feature of the sheath would be openings provided therein for evacuating gas from an outer surface of the sheath during the foaming. Indeed, during the foaming, the sheath represents an obstacle to the expansion of the foam. There is a tendency of foam materials to form a hard skin at obstacles, which in the present case could adversely affect sensor behaviour. It has been observed, however, that the tendency to form hard skins is reduced if gas is evacuated from the contact surface between the obstacle and the foam material.

Most preferably, the process for forming the foam element is automatic.

### Brief Description of the Drawings

Further details and advantages of the present invention will be apparent from the following detailed description of a not limiting embodiment with reference to the attached drawings, wherein:
Fig. 1 is a partially cut-away top view of a mould for a foam element of a vehicle seat having a pressure sensor positioned therein;
Fig. 2 is a perspective view of the mould of Fig. 1
Fig. 3 is a view of the A-A cross-sectional plane of Fig. 1;
Fig. 4 is a side view on detail B of Fig. 2;
Fig. 5 is a cross sectional view of a sheath having a sensor finger arranged therein;
Fig. 6 is a perspective view of a detail of the sensor of Fig. 1;
Fig. 7 is a bottom-side view of the detail shown in Fig. 5;
Figs. 8-10 are cross-sectional views of alternative sheaths.

### Description of Preferred Embodiments

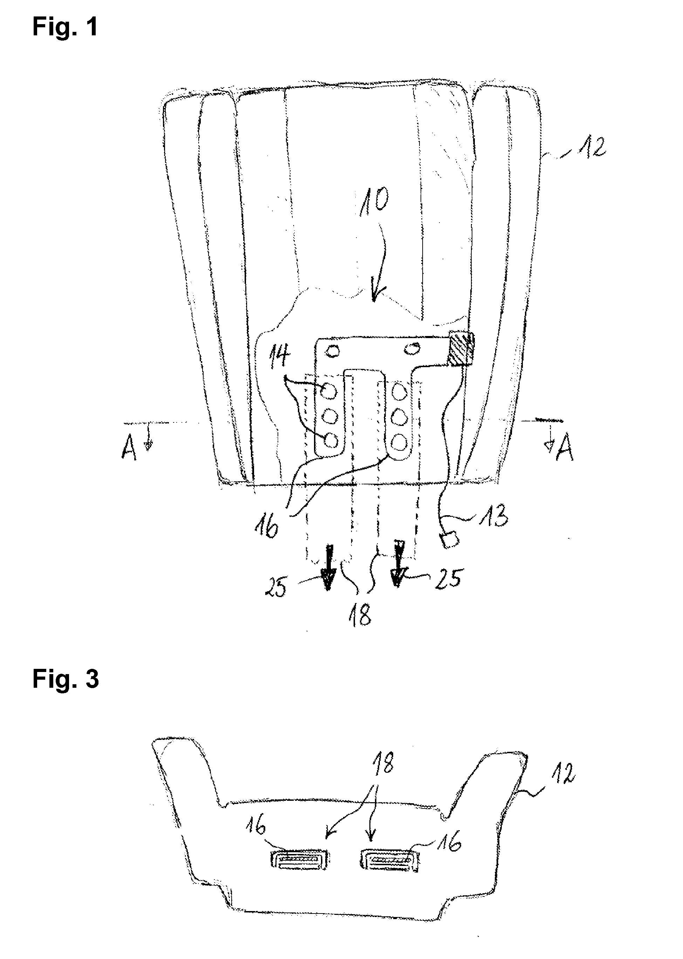

Figs. 1 and 3 illustrate how a film-type pressure sensor 10 may be positioned in a mould 12 for foaming a foam element (e.g. a polyurethane foam element) of a vehicle seat. An ordinary film-type pressure sensor 10 typically comprises two flexible carrier films spaced from one another by a spacer layer. The spacer layer has openings therein in which the first and second flexible carrier films can be brought closer together by a compressive force, exerted e.g. by a seat occupant. In these openings, the pressure sensor is provided with electrodes on the inner sides of the first and second carrier films so that bringing the first and second carrier films together eventually results in the establishment of an electrical contact. Some pressure sensors operate as simple switches (off: no contact - on: contact, or vice versa), others also detect the amount of pressure exerted by determining an electrical quantity (resistance, voltage or current) of the electrical contact. In such pressure sensors, the openings in the spacer layer define the so-called pressure-sensitive cells, shown at reference numeral 14. It should be noted that other sensors could be integrated into a foam element according to the invention. Such sensors could include, for instance, capacitive sensors. Pressure sensor 10 is preferably positioned in the foam element in such a way that its pressur-sensitive cells are located in a region where an normally seated adult exerts maximum pressure.

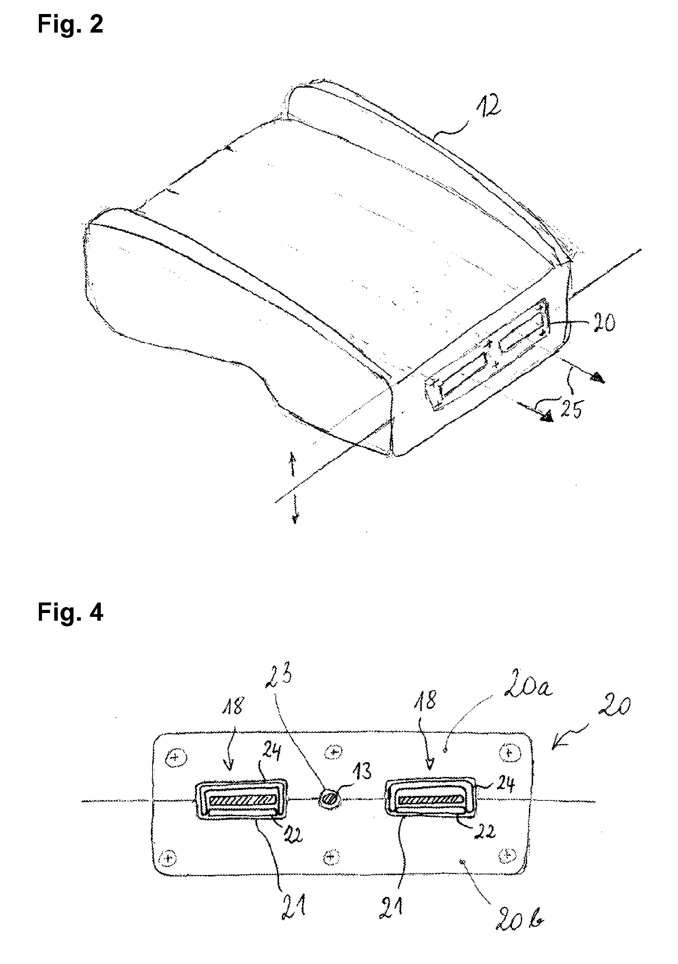

As can be seen in the cutaway portion of Fig. 1, the pressure-sensitive cells 14 are arranged on finger-like members 16 (the so-called "functional areas", hereinafter also referred to as fingers) of the sensor 10. The finger-like members 16 are sheathed by sheaths 18 (dashed lines in Fig. 1), which prevent deformation and preload of the functional areas of the sensor 10. The sheaths 10 are fixed to the mould 12 and clamped to the pressure sensor 10, so as to maintain the latter in position during the foaming. Figs. 2 and 4 show that the mould 12 is provided with a bushing 20 in which the sheaths 18 can be fastened. The bushing 20 preferably comprise Teflon^{™} guides 21, which allow retracting the sheaths 18 from the interior of the mould 12. Additionally, the bushing 20 may comprise a cable guide 23 for the connection cable 13 of the sensor 10. The bushing 20 is preferably made of two halves 20a and 20b, each half being arranged on one half of the mould 12. Alternatively, the bushing 20 could also be arranged on a single one of the mould halves. In the present embodiment, the bushing 20 is located at the side that corresponds to the rear of the foam element. It should be noted, however, that such bushing could also be located on the sides of the mould that correspond to the lateral bolsters of the foam element.

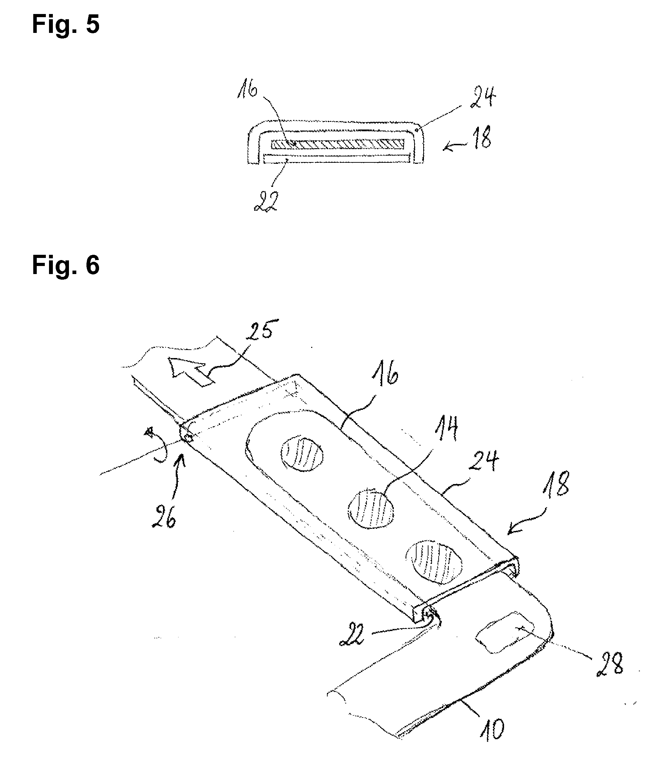

A preferred embodiment of sheaths is shown in Figs. 5, 6 and 7. Such sheath 18 comprises a first plate 22 and a second plate 24, which are connected to one another by a hinge 26. The first plate 22 is essentially flat and rectangular. With a recess on its side facing the first plate 22, the second plate 24 has essentially the form of a U-profile. The height of the limbs of the "U" is chosen such that the second plate 24 can accommodate the first plate 22 and the sensor finger 16 sandwiched between the first plate 22 and the bottom of the "U". The sheath 18 can be locked in the closed position in such a way that the sensor finger 16 is clamped between the first and the second plates 22, 24. It should be noted that either one of the plates 22 and 24 could be the top plate, respectively the bottom plate.

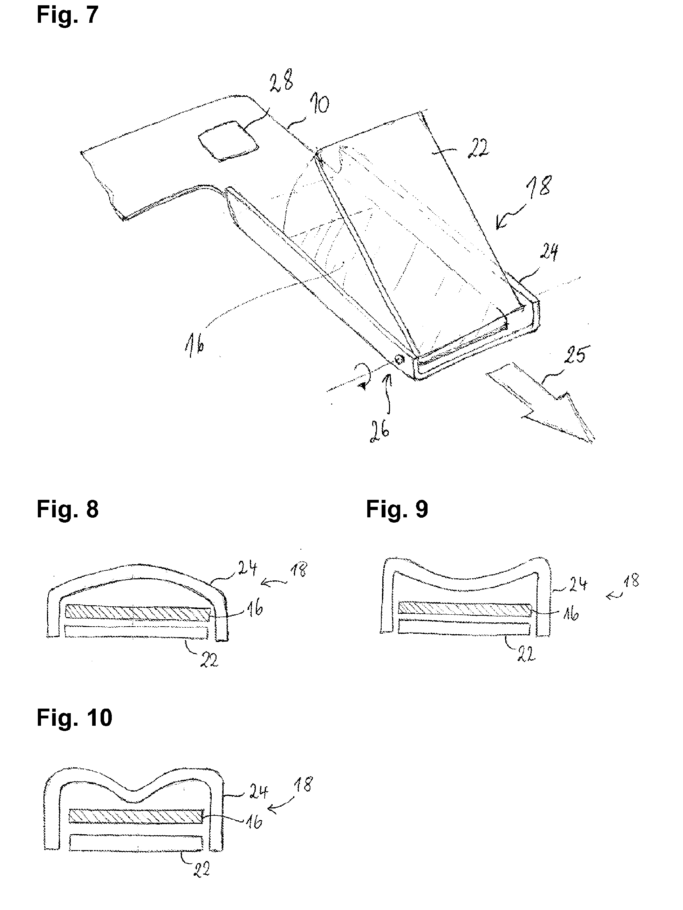

Fig 7 illustrates the insertion of a finger-like sensor member 16 into a sheath 18. To facilitate insertion, the sheath 18 is opened by making the first plate 22 pivot about the hinge 26. The sensor finger 16 is then put into position, the sheath 18 is closed and thereby fastened to the sensor finger 16.

Thereafter, the sheaths 18 and the sensor 10 are brought into position in the mould 12 by mounting the sheaths 18 to the bushing 20. When the sensor 10 is in position and the mould 12 closed, the foaming itself is started e.g. by injecting foam or foam precursor material into the mould. As can be seen, the sensor 10 comprises, in its unsheathed part, eyelets 28, where the foam may pass through the sensor 10 during the foaming. When the foam is cured, the sensor is firmly fastened to the foam element at the eyelets 28. On the other hand, the pressure-sensitive cells are protected during the foaming by the sheaths 18, so that no deformation or preloads adversely affects later sensor operation. When the foam is partially or entirely cured, the sheaths 18 are loosened from the sensor fingers 16 and retracted from the foam element, while the sensor 10 is left behind therein. The retraction direction is indicated in Figs. 1, 2, 6 and 7 by arrows 25. It should be noted that complete opening of the sheaths 18 is not necessary to release the finger-like members 16. Retracting the sheaths 18 can either be done before or after the foam element is removed from the mould 12.

Figs. 8-10 show alternative cross-sections for the sheath 18, which cause different shapes of the cavities created around the sensor 10 during the foaming process. In the embodiment of Fig. 8, the second plate 24 of the sheath is substantially convex, which leads to an increased height of the cavity around the pressure sensor. Such shape may be preferred to compensate for possible sagging and/or collapsing of the foam element during the foaming process and/or lifetime. Figs. 9 and 10 show the second plate having a concave cross-section. Such shape may be of interest if foam material in contact with the sheath forms a kind of hard skin or gas bubbles. Such effect could have an impact on sensor response, making it less sensitive to pressure exerted by a seat occupant. The concave shape of the second plate results in the formation of protrusions in the cavity that concentrate the force onto the sensor. In Fig. 10, the concave portion of the sheath is narrower, resulting in finer concentration of the force. Advantageously, the concave portions of the sheath are centred upon the pressure-sensitive cells of the sensor.

Since the sheaths 18 are elements separate from the mould 12, one can remove a foam element from the mould together with the sheaths 18, put into place another set of sheaths 18 with a sensor 10 and reuse the mould 12 without any delay caused by removing the sheaths 18 from the foam element, cleaning them from foam residues and applying thereon new lubricant.

## Claims

1. A method for providing a foam element with a film-type sensor, said method comprising
providing a mould in which said foam element is to be foamed;
positioning said sensor within said mould;
foaming said foam element in said mould;
**characterized by**
sheathing at least a part of said sensor with a rigid sheath, said rigid sheath protecting at least said part of the sensor during the foaming of the foam element, said rigid sheath being removable from said foam element after the foaming thereof.

2. The method as claimed in claim 1, wherein, during the foaming, said sensor comprises one or more parts unsheathed by said sheath.

3. The method as claimed in claim 2, wherein an unsheathed part of said sensor has through-holes therein and wherein foam material is caused to penetrate said through-holes during the foaming for fixing said sensor to said foam element.

4. The method as claimed in claim 2 or 3, wherein an unsheathed part of said sensor is covered with a material that strongly adheres to the foam element during and/or after the foaming thereof.

5. The method as claimed in any one of claims 1 to 4, comprising fastening said sheath to said sensor prior to the foaming and unfastening said sheath from said sensor after said foaming.

6. The method as claimed in any one of claims 1 to 5, wherein said sheath is removed from said foam element before said foam element is removed from said mould.

7. The method as claimed in any one of claims 1 to 5, wherein said sheath is removed from said foam element after said foam element is removed from said mould.

8. The method as claimed in any one of claims 1 to 7, wherein said sheath is removably fastened to said mould for positioning said sensor within the mould.

9. The method as claimed in any one of claims 1 to 8, wherein said sheath has outer surfaces comprising or being covered with a material weakly adhering to the foam element during the foaming thereof.

10. The method as claimed in any one of claims 1 to 9, wherein said sheath comprises a first plate and a second plate, said first and second plates being arranged so as to sandwich the part of the sensor to be protected.

11. The method as claimed in claim any one of claims 1 to 10, wherein said sheath comprises convex surface portions for providing a spacing between the sensor and the foam element.

12. The method as claimed in any one of claims 1 to 11, wherein said sensor comprises pressure-sensitive cells and wherein said sheath sheathes at least said pressure-sensitive cells, said sheath comprising concave surface portions associated with the pressure-sensitive cells, said concave surface portions causing said foam element to be provided with actuator elements associated with the pressure-sensitive cells.

13. The method as claimed in any one of claims 1 to 12, wherein said sheath has openings therein for evacuating gas from an outer surface of the sheath during the foaming.

14. The method as claimed in any one of claims 8 to 13, wherein said sheath is removably fastened to a back or a front side of said mould.

15. The method as claimed in any one of claims 8 to 13, wherein said sheath is removably fastened to a lateral side of said mould.
